# EUROPEAN PATENT APPLICATION

(11) **EP 1 643 613 A2**
(43) Date of publication of application: **05.04.2006**
(21) Application number: 05014287.6
(22) Date of filing: 30.06.2005
(51) Int. Cl.: H02K 1/02, H02K 1/06

(54) **Electric motor in which the stator laminations are of different thickness and/or material to the rotor laminations**

(30) Priority: 30.09.2004 US 955868
(71) Applicant: Reliance Electric Technologies, LLC, Mayfield Heights, Ohio 44124 (US)
(72) Inventor: Daugherty, Roger, Simpsonville, SC 29681 (US); Narayanan, Rajmohan, Greer, SC 29650 (US); Pizzichil, William, Easley, SC 29640 (US)
(74) Representative: Jung HML

(57) **Abstract**

In accordance with one exemplary embodiment, the present technique provides an electric motor having a stator core that is formed of a plurality of stator laminations and a rotor core that is formed of a plurality of rotor laminations. In the exemplary motor, the rotor laminations have mechanical and/or electrical characteristics that are different from the stator laminations. For example, the rotor laminations may have a different thickness than the stator laminations. Also, the rotor laminations may comprise a different material than the stator laminations. For example, the stator laminations may by alloyed with a certain percentage of an element, while the rotor laminations are alloyed with a different percentage of element.

## Description

### BACKGROUND

The present technique relates generally to the field of electric motors and generators and, particularly, to the construction of the rotor and stator laminations of such motors and generators.

Electric motors of various types are commonly found in industrial, commercial, and consumer settings. In industry, such motors are employed to drive various kinds of machinery, such as pumps, conveyors, compressors, fans and so forth, to mention only a few. Conventional alternating current (ac) electric motors may be constructed for single- or multiple-phase power, and are typically designed to operate at predetermined speeds or revolutions per minute (rpm), such as 6000 rpm, 3600 rpm, 1800 rpm, 1200 rpm, and so on. Such motors generally include a stator comprising a multiplicity of windings surrounding a rotor, which is supported by bearings for rotation in the motor frame. Typically, the rotor and stator comprise a core formed of a series of magnetically conductive laminations arranged to form a lamination stack.

In the case of ac motors, applying ac power to the stator windings induces a current in the rotor. The electromagnetic relationships between the rotor and the stator cause the rotor to rotate. The speed of this rotation is typically a function of the frequency of ac input power (i.e., frequency) and of the motor design (i.e., the number of poles defined by the stator windings). A rotor shaft extending through the motor housing takes advantage of this produced rotation and translates the rotor's movement into a driving force for a given piece of machinery. That is, rotation of the shaft drives the machine to which it is coupled.

Often, design parameters call for relatively high rotor rotation rates, i.e., high rpm. By way of example, a rotor within an induction motor may operate at 5000 rpm, and beyond. Based on the diameter of the rotor, operation at such rpm translates into relatively high surface speeds on the rotor. Again, by way of example, rotor surface speeds may reach values of 100 meters per second (mps), and beyond. During operation, particularly during high-speed operation, produced centripetal and centrifugal forces strain various components of the rotor assembly. These centripetal and centrifugal forces, if not accounted for, may negatively affect the mechanical integrity of the rotor, leading to a lessening of performance and, in certain instances, failure of the motor. Additionally, operation of induction motors at high speeds generally calls for the use of high-frequency power which, in turn, exacerbates certain electromagnetic effects. For example, operating with high-frequency power increases core losses in the stator, which can negatively impact the efficiency of the motor. Undeniably, loss of performance and motor failure are events that can lead to unwanted costs and delays.

In constructing such high-speed motors, the rotor laminations and the stator laminations traditionally comprise the same metallic material. That is, the stator laminations and the rotor laminations are stamped from the same sheet of electric steel, for example. Accordingly, the rotor and stator laminations comprise the same electrical steel material and have the same thickness. Unfortunately, the electrical and mechanical properties desirable for a rotor lamination are often incongruous with the mechanical and electrical properties desirable for a stator lamination. For example, high-speed motors operate at relatively high power frequencies, and, as such, the stator benefits from materials presenting certain electromagnetic properties, such as low core loss values. Indeed, the mechanically immotile nature of the stator mitigates the relative importance of certain mechanical properties (i.e., yield strength) of the stator lamination's construction. By contrast, and particularly in high-speed motors, the centrifugal and centripetal forces produced in the rotor during operation may stress the mechanical limits of the rotor lamination and, as such, underscore the need for rotor laminations having good mechanical properties, such as high yield strength. Moreover, the rotor does not experience high-frequency oscillations of power, because the rotor only experiences the slip frequency of the motor. Accordingly, design parameters related to core loss may yield to parameter improving other electromagnetic properties, such as parameters increasing permeability.

There is a need, therefore, for an electric motor having an improved construction in comparison to traditional motors.

### BRIEF DESCRIPTION

In accordance with one exemplary embodiment, the present technique provides an electric motor, such as an induction motor. The exemplary motor includes a stator core, which is formed of a plurality of stator laminations, and a rotor core formed of a plurality of rotor laminations and rotateably disposed in the stator core. The stator laminations and rotor laminations have properties well suited to the varied operating conditions and environments of the stator and rotor respectfully. For example, the rotor laminations are mechanically dynamic and, as such, have a construction focused on good mechanical properties, such as yield strength. In contrast, the immotile stator may present a construction focused on certain electromagnetic properties, such as reduced core loss. Advantageously, the use of different stator and rotor lamination constructions improves the efficiency of the motor and facilitates operation of the rotor at higher speeds.

In accordance with another exemplary embodiment, the present technique provides a method of manufacturing an electric motor. The exemplary method includes the act of providing a plurality of stator laminations, each comprising a first metallic material and having a first lamination thickness to form a stator core having a rotor chamber extending axially through the stator core and a plurality of stator slots disposed concentrically about the rotor chamber. The exemplary method also includes the act of providing a plurality of rotor laminations, each comprising a second metallic material and having a second lamination thickness to form a rotor core sized in accordance with the rotor chamber. To improve the efficiency of a motor produced via the exemplary method, the exemplary method also includes the act of providing the rotor and stator laminations such that the lamination thicknesses and/or metallic materials are different. By way of example, the stator laminations and/or the rotor laminations may be fabricated via stamping or casting processes.

In accordance with yet another exemplary embodiment, the present technique provides a method of designing an electric motor. The exemplary method includes the act of selecting a first metallic material for a stator lamination of the electric motor and selecting a second metallic material for a rotor lamination of the electric motor. As the first and second materials are different from one another, the first material may present properties well-suited for use in the stator, whereas the second material presents properties well-suited for the rotor. By way of the example, the first material, which is for the stator laminations, may present a lower core loss value than the second material. Contrastingly, the second material, which is for the rotor laminations, may present a higher yield-strength than the first material. As another example, the first material may be thinner than the second material, and as such, provide stator and rotor laminations having varied thicknesses.

### DRAWINGS

The foregoing and other advantages and features of the technique will become apparent upon reading the following detailed description and upon reference to the drawings in which:

Fig. 1 is a perspective view of an electric motor, in accordance with an embodiment of the present technique;

Fig. 2 is a partial cross-section view of the electric motor of Fig. 1 along line 2-2;

Fig. 3 is an exploded view of a series of adjacent stator laminations, in accordance with an embodiment of the present technique;

Fig. 4 is a cross-section view of a stator lamination of Fig. 3 along line 4-4;

Fig. 5 is an exploded view of a series of adjacent rotor laminations in accordance with an embodiment of the present technique;

Fig. 6 is a cross-section view of a rotor lamination of Fig. 5 along line 6-6; and

Fig. 7 illustrates in block form an exemplary process for designing and manufacturing an electric motor, in accordance with an embodiment of the present technique.

### DETAILED DESCRIPTION

As discussed in detail below, embodiments of the present technique provide apparatus and methods for motors and motor construction as well as generators and generator construction. Although the following discussion focuses on high-speed induction motors, the present technique also affords benefits to a wide variety of electric machines. For example, the present technique affords benefits to induction devices, wound rotors and generators, permanent magnet (PM) devices, to name but a few machines. Accordingly, the following discussion provides exemplary embodiments of the present technique and, as such, should not be viewed as limiting the appended claims to the embodiments described.

As a preliminary matter, the definition of the term "or" for the purposes of the following discussion and the appended claims is intended to be an inclusive "or." That is, the term "or" is not intended to differentiate between two mutually exclusive alternatives. Rather, the term "or" when employed as a conjunction between two elements is defined as including one element by itself, the other element itself, and combinations and permutations of the elements. For example, a discussion or recitation employing the terminology "A' or 'B" includes: "A" by itself "B," and any combination thereof, such as "AB" and/or "BA."

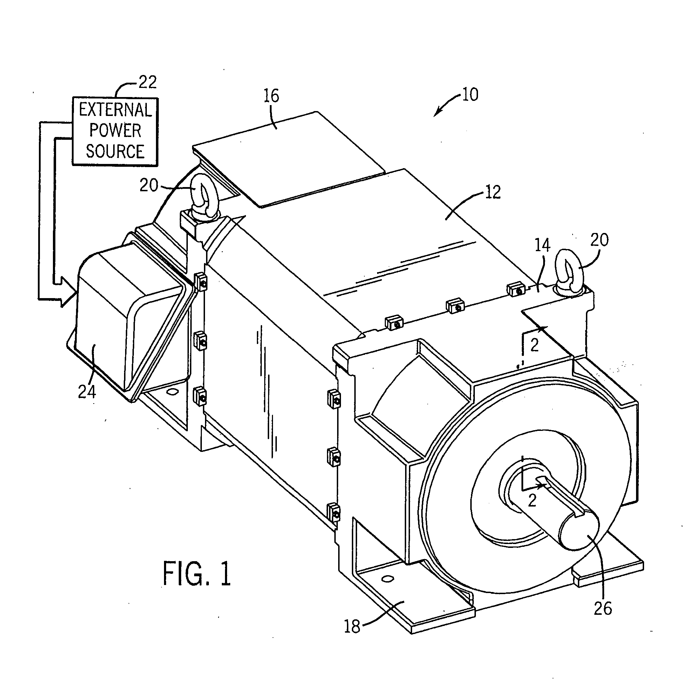

Turning to the drawings, Fig. 1 illustrates an exemplary electric motor 10. In the embodiment illustrated, the motor 10 comprises an induction motor housed in a motor housing. The present housing design, however, is merely an exemplary design. Those of ordinary skill in the art will appreciate that the present technique is applicable to any number of motor housings and constructions, such as frameless motors and motor housings in accordance with the standards promulgated by the National Manufacturers' Association (NEMA). Indeed, those of ordinary skill in the art appreciate that associations such as NEMA develop particular standards and parameters for the construction of motor housings or enclosures. The exemplary motor 10 comprises a frame 12 capped at each end by front and rear endcaps 14 and 16, respectively. The frame 12 and the front and rear endcaps 14 and 16 cooperate to form the enclosure or motor housing for the motor 10. The frame 12 and the front and rear endcaps 14 and 16 may be formed of any number of materials, such as steel, aluminum, or any other suitable structural material. The endcaps 14 and 16 may include mounting and transportation features, such as the illustrated mounting flanges 18 and eyehooks 20. Those skilled in the art will appreciate in light of the following description that a wide variety of motor configurations and devices may employ the construction techniques outlined below.

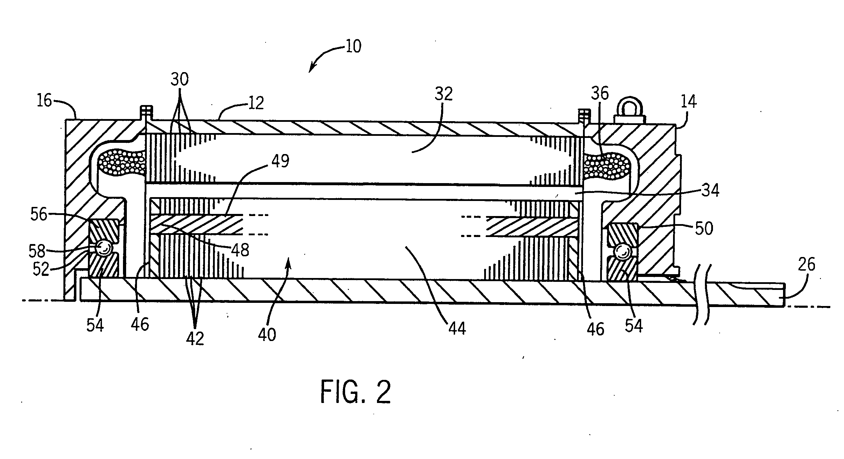

To induce rotation of the rotor, current is routed through stator windings disposed in the stator. (See Fig. 2.) Stator windings are electrically interconnected to form groups which are, in turn, interconnected in a manner generally known in the pertinent art. The stator windings are further coupled to terminal leads (not shown), which electrically connect the stator windings to an external power source 22, such as 480 Vac three-phase power or 110 Vac single-phase power. As another example, the external power source 22 may comprise an ac pulse width modulated (PWM) inverter. A conduit box 24 houses the electrical connection between the terminal leads and the external power source 22. The conduit box 24 comprises a metal or plastic material and, advantageously, provides access to certain electrical components of the motor 10. Routing electrical current from the external power source 22 through the stator windings produces a magnetic field that induces rotation of the rotor. A rotor shaft 26 coupled to the rotor rotates in conjunction with the rotor. That is, rotation of the rotor translates into a corresponding rotation of the rotor shaft 26. As appreciated by those of ordinary skill in the art, the rotor shaft 26 may couple to any number of drive machine elements, thereby transmitting torque to the given drive machine element. By way of example, machines such as pumps, compressors, fans, conveyors, and so forth, may harness the rotational motion of the rotor shaft 26 for operation.

Fig. 2 is a partial cross-section view of the motor 10 of Fig. 1 along line 2-2. To simplify the discussion, only the top portion of the motor 10 is shown, as the structure of the motor 10 is essentially mirrored along its centerline. As discussed above, the frame 12 and the front and rear endcaps 14 and 16 cooperate to form an enclosure or motor housing for the motor 10. Within the enclosure or motor housing resides a plurality of stator laminations 30 juxtaposed and aligned with respect to one another to form a lamination stack, such as a contiguous stator core 32. However, as discussed above, the present technique is equally applicable to frameless motors, in which the periphery of the stator core 32 forms an external surface of the motor. In the exemplary motor 10, the stator laminations 30 are substantially identical to one another, and each includes features that cooperate with adjacent laminations to form cumulative features for the contiguous stator core 32. For example, each stator lamination 30 includes a central aperture that cooperates with the central aperture of adjacent laminations to form a rotor chamber 34 that extends the length of the stator core 32 and that is sized to receive a rotor. Additionally, each stator lamination 30 includes a plurality of stator slots disposed circumferentially about the central aperture. These stator slots cooperate to receive one or more stator windings 36, which are illustrated as coil ends in Fig. 2, that extend the length of the stator core 32.

In the exemplary motor 10, a rotor 40 resides within the rotor chamber 34. Similar to the stator core 32, the rotor 40 comprises a plurality of rotor laminations 42 aligned and adjacently placed with respect to one another. Thus, the rotor laminations 42 cooperate to form a contiguous rotor core 44. The exemplary rotor 40 also includes end rings 46, disposed on each end of the rotor core 44, that cooperate to secure the rotor laminations 42 with respect to one another. When assembled, the rotor laminations 42 cooperate to form shaft chamber that extends through the center of the rotor core 44 and that is configured to receive the rotor shaft 26 therethrough. The rotor shaft 26 is secured with respect to the rotor core 44 such that the rotor core 44 and the rotor shaft 26 rotate as a single entity-the rotor 40. The exemplary rotor 40 also includes end rings and electrically conductive nonmagnetic members, such as rotor conductor bars 48 or electrical windings (not shown), disposed in the rotor core 44. The rotor conductor bars 48 can be cast with respect to the remainder of the rotor or inserted after fabrication, among other possible constructions. Specifically, the conductor bars 48 are disposed in rotor channels 49 that are formed by amalgamating features of each rotor lamination 42, as discussed further below. Inducing current in the rotor 40, specifically in the conductor bars 48, causes the rotor 40 to rotate. By harnessing the rotation of the rotor 40 via the rotor shaft 26, a machine coupled to the rotor shaft 26, such as a pump or conveyor, may operate.

To support the rotor 40, the exemplary motor 10 includes front and rear bearing sets 50 and 52, respectively, that are secured to the rotor shaft 26 and that facilitate rotation of the rotor 40 within the stationary stator core 32. During operation of the motor 10, the bearing sets 50 and 52 facilitate transfer of the radial and thrust loads produced by the rotor 40 to the motor housing. Each bearing set 50 and 52 includes an inner race 54 disposed circumferentially about the rotor shaft 26. The tight fit between the inner race 54 and the rotor shaft 26 causes the inner race 54 to rotate in conjunction with the rotor shaft 26. Each bearing set 50 and 52 also includes an outer race 56 and ball bearings 58, which are disposed between the inner and outer races 54 and 56. The ball bearings 58 facilitate rotation of the inner races 54 while the outer races 56 remain stationary and mounted with respect to the endcaps 14 and 16. Thus, the bearing sets 50 and 52 facilitate rotation of the rotor 40 while supporting the rotor 40 within the motor housing, i.e., the frame 12 and the endcaps 14 and 16. To reduce the coefficient of friction between the races 54 and 56 and the ball bearings 58, the ball bearings 58 are coated with a lubricant.

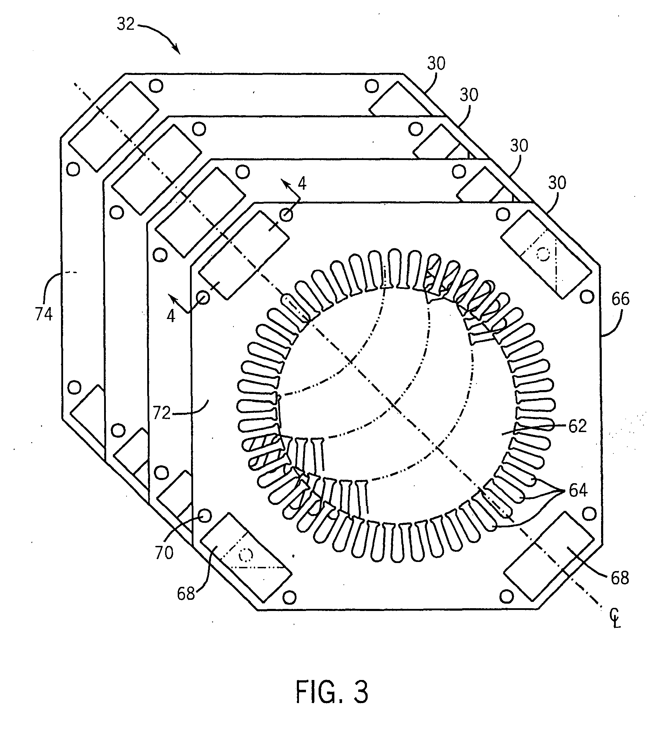

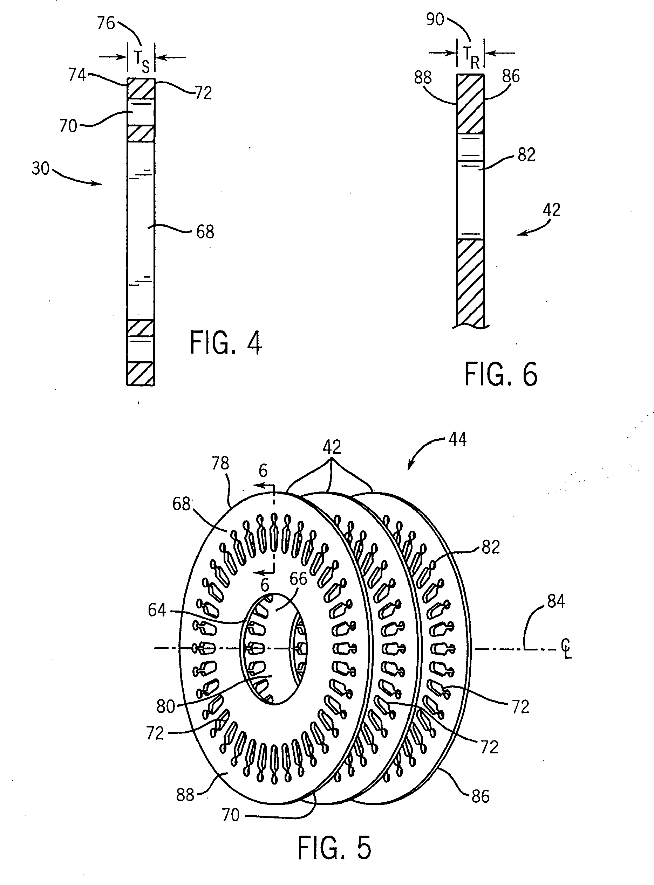

Fig. 3 illustrates a series of adjacent stator laminations 30 of a stator core 32. The exemplary stator laminations 30 are relatively thin structures that are, as discussed further below, formed of a magnetically conductive metallic material. Each stator lamination 30 includes a central aperture 62 that extends axially through the stator lamination from end-to-end. As discussed above, when arranged along an axial centerline, for example, the central apertures 62 of adjacent stator laminations 30 cooperate to form an incremental section of the rotor chamber 34, which, as discussed above, extends the length of the stator core 32. (See Fig. 2.) Additionally, each stator lamination 30 includes stator slots 64 disposed concentrically about the central aperture 62. The stator slots 64 of adjacent stator laminations 30 cooperate to form an incremental section of the cumulative stator slots, which also extend the length of the stator core 32. As discussed above, the stator slots 64 receive stator windings 36, which route current through the stator core 32. Each stator lamination 30 also has an outer periphery 66 that defines the cross-section and shape of the stator lamination 30. Advantageously, the shape of the stator laminations 30 follows closely with the shape of the frame 12 (see Fig. 1) and, as such, presents good tolerances with respect to the frame 12, thereby providing a tight fit between the two structures and mitigating the occurrences of errant vibrations. However, the presently illustrated rectangular lamination is only an exemplary shape, and the present technique is equally applicable to stators having any number of shapes, e.g., circular, and any number of frame shapes and constructions, including frameless constructions. Additionally, each stator lamination 30 may include other features, such as the illustrated cooling ducts 68 and through holes 70, which each cooperate with the corresponding features of adjacent laminations 30 to define cumulative features extending axially through the stator core 32. Each stator lamination 30 has end surfaces 72 and 74 that are generally parallel to one another. Accordingly, the distance between the parallel end surfaces 72 and 74 defines the lamination thickness 76 (as illustrated in Fig. 4).

Fig. 5 illustrates a series of adjacent rotor laminations 42 of a rotor core 44. Similar to the stator laminations 30, the rotor laminations 42 are relatively thin structures. Each rotor lamination 42 has an outer periphery 78 that defines a generally circular rotor lamination cross-section. The rotor laminations 42 are sized in accordance with the central apertures 62 of the stator laminations 30. (See Fig. 3). That is to say, the rotor laminations 42 and, as such, the rotor core 44 are sized to fit within the rotor chamber 34. (See Fig. 2). Each exemplary rotor lamination 42 also includes a shaft aperture 80 that is configured to receive a rotor shaft 26 (see Fig. 2) therethrough. Furthermore, each rotor lamination 42 includes a series of concentrically arranged rotor slots 82. When aligned with respect to one another along the axial centerline 84 of the rotor 40, the foregoing features cooperate to form cumulative features that extend the length of the rotor core 44. For example, the rotor slots 82 of each rotor lamination 42 comprise incremental sections of passageways that extend through the rotor core 44 and that are configured to receive the conductor bars 48 (see Fig. 2). Additionally, each rotor lamination 42 has generally parallel end surfaces 86 and 88 that define the rotor lamination thickness 90, (as illustrated in Fig. 6.)

During operation, the rotor laminations 42 and the stator laminations 30 experience varied operating environments and conditions, as discussed further below. Thus, the exemplary motor 10 (see Fig. 1) comprises stator laminations 30 and rotor laminations 42 presenting constructions characteristics (i.e., material selection and physical design) that have mechanical and electrical properties well-suited to the varied environments and conditions of the stator core 32 and the rotor 40, respectively. It is worth note that in the present discussion the term "mechanical properties" refers to properties related to the physical forces acting on an item and the term "electrical properties" refers to properties related to the physics of electricity and magnetism with respect to the item. However, these two categories (i.e., mechanical and electrical properties) are not necessarily mutually exclusive. For example, a construction characteristic of a rotor lamination 42 may affect both the electrical and mechanical properties of the rotor lamination 42. Moreover, the mechanical and electrical properties of the exemplary rotor lamination 42 may be a function of the material selection and/or physical design of the rotor lamination 42, for instance.

During operation, particularly in high-speed motors, the rotor 40 experiences relatively significant physical loads. For example, applying operating power at a frequency of 400 Hz to a ten-pole three-phase ac motor results in a synchronous speed value of approximately 5,000 rpm. Thus, based on the slip and/or loading of the motor 10, the rotor 40 rotates essentially at 5,000 rpm, i.e., a rotation rate of 5,000 rpm. Indeed, operation at such high rotation rates (i.e., rotor rpm) and high surface speeds produces centripetal and centrifugal forces that can mechanically strain various components of the rotor 40. As one example, these produced forces, if not accounted for, may cause undesirable plastic and/or elastic deformation of the rotor laminations 42. Such deformation can lead to a reduction in rotor 40 performance by affecting the rotational symmetry of the rotor 40 and, in certain instances, can lead to a failure of the rotor 40 all together. Moreover, these produced forces, if not accounted for, may cause stress fractures in the rotor laminations, again affecting the performance and reliability of the motor. Indeed, rotor laminations 42 having robust mechanical properties can improve the performance and/or reliability of the motor 10.

Additionally, certain electromagnetic properties of the rotor laminations 42 affect the performance of the rotor 40 to varying degrees. For example, core loss, which is the inefficient conversion and dissipation of electrical energy into heat, does not, relatively speaking, impact the performance of the rotor 40. That is to say, although it is desirable to minimize core loss in the rotor 40, the effect of core loss in rotor 40 is negligible, because core loss is a function of the frequency and because the applied slip-frequency is a fraction of the frequency of the operating power in the stator windings 36 (see Fig. 2). By contrast, improving the magnetic permeability of the rotor 40 can measurably improve the efficiency of the motor 10. As appreciated by those of ordinary skill in the art, magnetic permeability refers to the magnetic sensitivity of the rotor 40 and the value of the flux density produced by the given magnetization level. Thus, the greater the magnetic permeability of the rotor 40, the larger the magnetic field produced in the motor in response to a given current level through the stator windings 36.

In contrast to the rotor 40, the stator core 32 is stationary within the frame 12 and, as such, does not experience the magnitude of physical forces developed in the rotor 40. Thus, certain mechanical properties (e.g., yield strength, tensile strength) of the stator core 32 can be less robust than those for the rotor 40. However, operation at higher power frequencies increases the effects of certain electromagnetic properties of the stator core 32. For example, at higher frequencies of power, the importance of the core loss in the stator core 32 is amplified. Again, core loss represents an electrical inefficiency caused by oscillating the polarity of the power, as the electrical energy provided to the stator windings 36 (see Fig. 2) is converted and wastefully dissipated as heat. Accordingly, the greater the core loss in the stator core 32, the less efficient the motor 10. (As appreciated by those of ordinary skill in the art, core loss has two main factors: hysteresis losses and losses due to eddy currents.) By contrast, the magnitude of the current through the stator windings 36 mitigates the relative importance of the magnetic permeability of the stator core 32. That is, although it is desirable to maximize the magnetic permeability of the stator core 32, to do so at the expense of the effort to minimize core loss may not be prudent. Accordingly, the greater the core loss in the stator core 32, the less efficient the motor 10.

Thus, the exemplary motor 10 comprises stator laminations 30 and rotor laminations 42 that have constructions catered to varied environments of the stator core 32 and the rotor 40. That is to say, the stator laminations 30 and the rotor laminations 42 in the exemplary motor 10 have varied constructions (i.e., physical designs and material selection), each construction presenting properties better suited to the operational characteristics of the stator core 32 and rotor 40, respectively.

As discussed above, and with Figs. 1-6 in mind, the reduction of core losses in the stator core 32 can improve the efficiency of the motor 10, for instance. Accordingly, the exemplary stator laminations 30 have physical designs favorable to reducing core losses. For example, the exemplary stator laminations 30 may have a physical design that presents a relatively small lamination thickness 76 (i.e., a lamination thickness less than that of the rotor lamination 42). Although decreasing the thickness of the stator laminations 30 decreases the stator lamination's 30 mechanical robustness, it also decreases the core losses due to eddy currents in the stator lamination 30 and, as such, the stator core 32. Accordingly, decreasing the thickness of the stator laminations 30, so long as the minimum structural requirements for the stator core 32 are met, can improve the efficiency of the exemplary motor 10. Additionally, the texture of the stator end surfaces 72 and 74 can influence core losses in the stator core 32. For example, the exemplary stator laminations may have end surfaces 70 and 72 that are textured (i.e., a surface roughness), thereby increasing the electrical resistivity of the stator core 32 and, as such, decreasing core losses.

Additionally, material selection of the stator lamination 30 can affect the performance and efficiency of the motor 10. As appreciated by those of ordinary skill in the art, different materials present different core loss values, which are measured in watts per pound (W/lbs) or watts per kilogram (W/Kg) and are a function frequency of power applied (measured in Hz). For example, the exemplary stator laminations 30 comprise electrical steel that is alloyed with silicon, which increases the electrical resistively of the material and, as such, reduces core losses. By way of example, the stator laminations 30 may have silicon contents of 1 to 3%; of course, other percentages are envisaged. Moreover, alloying with other suitable elements, such as phosphorous, can also increase the resistivity of the electrical steel, thereby facilitating a reduction in the core loss value of the alloyed electrical steel. However, alloying an electrical steel with elements such as phosphorous and silicon can also decrease the magnetic permeability and magnetic saturation of the electrical steel, as discussed further below.

Because decreasing core loss is a focus of stator design and because increasing mechanical strength and magnetic permeability is a focus of rotor design, the construction of the rotor and stator laminations can be divergent from one another. That is, certain physical characteristics (e.g., lamination thickness) and materials that is best for one environment are often less than ideal for the other. Accordingly, the exemplary rotor laminations 42 have mechanical and electromagnetic properties that are focused on improving the rotor's operation and reliability and that are different from those of the stator laminations 30.

For example, the exemplary rotor laminations 42 each present a rotor lamination thickness 90 that is greater than the stator lamination thickness 76. Advantageously, increasing the rotor lamination thickness 90 provides for a more mechanically robust rotor lamination 42 and, as such, facilitates operation at higher speeds. That is to say, the rotor laminations 42 are better able to absorb the centrifugal and centripetal forces produced in the rotor 40 as a result of high-speed operation, for instance.

Additionally, material selection of the rotor lamination 42 affects the performance and efficiency of the motor. As appreciated by those of ordinary skill in the art, different materials present different magnetic permeability values and different magnetic saturation values, which are measured relative to the permeability and saturation of free space. Accordingly, the exemplary rotor laminations 42 comprise materials that have good magnetic permeability and saturation values. For example, the rotor laminations 42 may comprise electrical steels having lower silicon percentages than the stator laminations 30. Alternatively, the rotor laminations 42 may comprise a magnetic element that is different from the stator laminations 30 and that has a higher magnetic permeability value than the material from which the stator lamination is constructed. Advantageously, increasing the magnetic permeability value of the rotor laminations 42 improves the efficiency of the motor 10 by, for instance, creating a stronger magnetic field for the level of current in the stator windings 36.

Moreover, the mechanical properties of the rotor lamination material can affect the performance and reliability of the rotor 40. For example, selecting a rotor lamination material with good yield strength and/or the ultimate tensile strength values, which are measured in force per unit area (e.g., Pascal), increases the ability of the rotor lamination 42 to absorb increased centripetal and centrifugal forces, for instance. That is, increasing the yield strength and/or tensile strength value of the rotor lamination material provides for a more robust rotor 40 and can facilitate operation of the rotor 40 at higher rotation rates. Advantageously, varying the construction of the stator laminations 30 and rotor laminations 42 with respect to one another can improve the efficiency of the motor and facilitate high-speed operation.

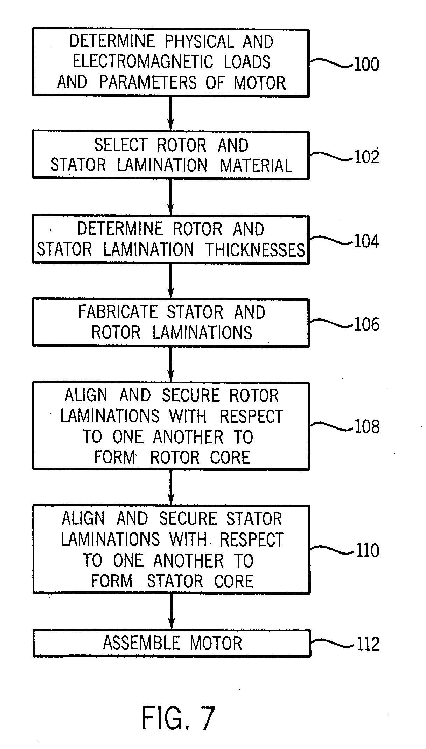

Keeping Figs. 1-6 in mind, Fig. 7 illustrates in block form an exemplary process for designing and manufacturing an exemplary motor 10. The process includes the act of determining the physical and electromagnetic loads and parameters of the motor 10. (Block 100.) For example, a designer may determine the synchronous speed at which the motor 10 will operate and, in turn, determine the centripetal and centrifugal forces likely to develop in the rotor 40 and the electrical loads in the stator, for instance. The exemplary process also includes the act of selecting rotor lamination 42 and stator lamination 30 materials. (Block 102.) For example, a designer may select an electrical steel material alloyed with silicon for the stator lamination 30, to decrease core losses within the stator core 32, while selecting a material having a lower silicon content than the stator lamination 30 for the rotor lamination 42, to increase the magnetic permeability value of the rotor core 44. The exemplary process also includes the act of determining the rotor and stator lamination thicknesses. (Block 104.) For example, a designer may select a thinner lamination thickness for the stator laminations 30 to decrease core losses, while selecting a thicker lamination for the rotor laminations 42 to increase the robustness of the rotor 40, for instance.

The exemplary process also includes the act of fabricating the rotor and stator laminations. (Block 106.) By way of example, the rotor and stator laminations may be fabricated via a stamping process, in which the laminations are stamped from sheets of metallic material, such as sheets of rolled electrical steel. However, to facilitate the rotor and stator laminations having varied thicknesses and/or varied material properties, the rotor and stator laminations may be stamped from appropriate sheets of material that are different from one another. Alternatively, the stator and rotor laminations may be fabricated via a casting process.

The exemplary process also includes the acts of aligning and securing the rotor laminations 42 with respect to one another and the stator laminations 30 with respect to one another to form the rotor core 40 and the stator core 32, respectively. (Blocks 108 and 110.) The assembled rotor 40 and stator core 32 may be assembled with respect to one another and the motor as a whole. (Block 112.)

While the technique may be susceptible to various modifications and alternative forms, specific embodiments have been shown by way of example in the drawings and have been described in detail herein. However, it should be understood that the technique is not intended to be limited to the particular forms disclosed. Rather, the technique is to cover all modifications, equivalents, and alternatives falling within the spirit and scope of the technique as defined by the following appended claims.
In summary the invention provides for an electric motor having a stator core that is formed of a plurality of stator laminations and a rotor core that is formed of a plurality of rotor laminations. In the exemplary motor, the rotor laminations have mechanical and/or electrical characteristics that are different from the stator laminations. For example, the rotor laminations may have a different thickness than the stator laminations. Also, the rotor laminations may comprise a different material than the stator laminations. For example, the stator laminations may by alloyed with a certain percentage of an element, while the rotor laminations are alloyed with a different percentage of element.

## Claims

1. An electric machine, comprising:
a stator core having a rotor chamber extending axially through the stator core, comprising a plurality of stator laminations each having a first lamination thickness and comprising a first metallic material, and
a rotor core rotateably disposed in the rotor chamber, the rotor core comprising a plurality of rotor laminations each having a second lamination thickness and comprising a second metallic material;
wherein the first and second lamination thicknesses are different from one another or the first and second metallic materials are different from one another.

2. The electric machine as recited in claim 1, wherein the first and second lamination thicknesses are different.

3. The electric machine as recited in claim 2, wherein the first and second metallic materials are the same.

4. The electric machine as recited in claim 1, 2, or 3, wherein the first or second metallic materials comprises electrical steel.

5. The electric machine as recited in claim 1 or 2, wherein the second metallic material has a higher magnetic permeability value than the first metallic material.

6. The electric machine as recited in claim 1 or 2, wherein the first metallic material has a higher magnetic saturation value than the second metallic material.

7. The electric machine as recited in claim 1 or 2, wherein the second metallic material has a higher yield strength value than the first metallic material.

8. The electric machine as recited in claim 1 or 2, wherein the first metallic material has a lower core loss value than the second metallic material.

9. The electric machine as recited in claim 1 or 2, wherein the first metallic material has a higher surface roughness value than the second metallic material.

10. The electric machine as recited in claim 1 or 2, wherein the first metallic material has a higher silicon percentage than the second metallic material.

11. The electric machine as recited in claim 1 or 2, wherein the second metallic material has a higher tensile strength value than the first metallic material

12. An electric machine, comprising:
a stator core comprising a plurality of stator laminations and having a rotor chamber extending axially through the stator core and a plurality of stator slots disposed concentrically about the rotor chamber, wherein each stator lamination of the plurality of stator laminations each comprises a first electrical steel;
a plurality of stator windings disposed in the plurality of stator slots and configured to receive power from a power source; and
a rotor core comprising a plurality of rotor laminations each having a lamination cross-section sized to fit in the rotor chamber and a plurality of rotor slots arranged concentrically with respect to one another, wherein each rotor lamination of the plurality of rotor laminations comprises a second electrical steel material different from the first electrical steel material.

13. The electric machine as recited in claim 12, wherein the first electrical steel material has a lower core loss value and a lower yield strength value than the second electrical steel material.

14. The electric machine as recited in claim 12, wherein the second electrical steel material has a higher magnetic permeability value than the first electrical steel material.

15. The electric machine as recited in claim 12, wherein second electrical steel has a higher magnetic saturation value than the first magnetic material.

16. The electric machine as recited in claim 12, wherein the stator winding are configured to receive power from an alternating current (ac) power source.

17. The electric machine as recited in claim 16, wherein the ac power source comprises a three-phase power source.

18. The electric machine as recited in claim 16, wherein the power source comprises a pulse width modulated (PWM) inverter.

19. The electric machine as recited in one of claims 12 to 18, comprising the power source.

20. An electric machine, comprising:
a stator core comprising a plurality of stator laminations each having a central aperture and a plurality of stator slots disposed about the central aperture, wherein the central apertures of adjacent stator laminations cooperate to defme a rotor chamber extending axially through the stator core, and wherein the plurality of stator laminations comprises a first electrical steel material;
a plurality of stator windings disposed in the stator slots and configured to receive power from an alternating current (ac) power source;
a rotor core rotateably disposed in the rotor chamber, the rotor core comprising a plurality of rotor laminations each having a generally circular rotor lamination cross-section and comprising a second electrical steel material, wherein the first electrical steel material has a lower core loss value and a lower yield strength value than the second electrical steel material; and
a plurality of conducive members extending axially through the rotor core generally transverse to the rotor lamination cross-sections.

21. The electric machine as recited in claim 20, wherein the plurality of conductive members comprises copper.

22. The electric machine as recited in claim 20, wherein the plurality of conductive members comprises aluminum.

23. A method of manufacturing an electric machine, comprising:
providing a plurality of stator laminations comprising a first metallic material and having a first lamination thickness, to form a stator core having a rotor chamber extending axially through the stator core and a plurality of stator slots disposed about the rotor chamber; and
providing a plurality of rotor laminations, each rotor lamination comprising a second metallic material and having a second lamination thickness, to form a rotor core sized in accordance with the rotor chamber, wherein the first and second laminations thicknesses are different from one another or the first and second metallic materials are different from one another.

24. The method as recited in claim 23, comprising fabricating the plurality of stator laminations or the plurality of rotor laminations.

25. The method as recited in claim 24, wherein fabricating comprises stamping.

26. The method as recited in claim 23, 24, or 25comprising providing the plurality of rotor and stator laminations such that the rotor lamination thicknesses are different from one another or the stator lamination thicknesses are different from one another.

27. The method as recited in claim 26, comprising providing the plurality of rotor laminations and stator laminations such that the first and second metallic materials are the same.

28. A method of manufacturing an electric machine, comprising:
aligning a plurality of stator laminations comprising a first electrical steel with respect to one another to form a stator core having a rotor chamber extending axially through the stator core and a plurality of stator slots disposed concentrically with respect to one another and configured to receive a plurality of stator windings; and
aligning a plurality of rotor laminations comprising a second electrical steel different from the first electrical steel with respect to one another to form a rotor core sized in accordance with the rotor chamber.

29. The method as recited in claim 28, comprising disposing the plurality of stator laminations in a frame.

30. The method as recited in claim 28 or 29, comprising securing the stator laminations with respect to one another.

31. The method as recited in claim 28, 29 or 30, comprising securing the rotor laminations with respect to one another.

32. The method as recited in one of claims 28 to 31, comprising disposing a plurality of conductive members in a plurality of channels extending axially through the rotor core.

33. A method of designing an electric machine, comprising:
selecting a first metallic material for a rotor lamination of the electric machine;
selecting a second metallic material for a stator lamination of the electric machine;
determining a first lamination thickness for the rotor lamination;
determining a second lamination thickness for the stator lamination, wherein the first and second lamination thicknesses are different and the metallic materials are different.

34. The method as recited in claim 33, comprising selecting the first and second metallic materials such that the first metallic material has a lower core loss value than the second metallic material.

35. The method as recited in claim 33, comprising selecting the first and second metallic materials such that the first metallic material has a higher yield strength value than the second metallic material.

36. The method as recited in claim 33, comprising selecting the first and second metallic materials such that the first metallic material has a higher magnetic permeability value than the second metallic material.

37. The method as recited in claim 33, comprising selecting the first and second metallic materials such that the first metallic material has a higher magnetic saturation value than the second metallic material.

38. The method as recited in one of claims 33 to 37, comprising selecting rotor and stator laminations such that the first lamination thicknesses are different from the second lamination thicknesses.

39. An electric machine, comprising:
a stator core having a rotor chamber extending axially through the stator core, comprising a plurality of stator laminations each having a first lamination thickness, and comprising a first metallic material, and
a rotor core rotateably disposed in the rotor chamber, the rotor core comprising a plurality of rotor laminations each having a second lamination thickness and comprising a second metallic material;
wherein the first and second lamination thicknesses are different from one another.

40. An electric machine, comprising:
a stator core having a rotor chamber extending axially through the stator core, comprising a plurality of stator laminations each having a first lamination thickness, and comprising a first metallic material, and
a rotor core rotateably disposed in the rotor chamber, the rotor core comprising a plurality of rotor laminations each having a second lamination thickness and comprising a second metallic material;
wherein the first and second metallic materials are the same..

41. An electric machine manufactured by a process comprising:
aligning a plurality of stator laminations comprising a first electrical steel with respect to one another to form a stator core having a rotor chamber extending axially through the stator core and a plurality of stator slots disposed concentrically with respect to one another and configured to receive a plurality of stator windings; and
aligning a plurality of rotor laminations comprising a second electrical steel different from the first electrical steel with respect to one another to form a rotor core sized in accordance with the rotor chamber.

42. An electric machine manufactured by a process comprising:
selecting a first metallic material for a rotor lamination of the electric machine;
selecting a second metallic material for a stator lamination of the electric machine;
determining a first lamination thickness for the rotor lamination; and
determining a second lamination thickness for the stator lamination, wherein the first and second lamination thicknesses are different and the metallic materials are different.
